Europäisches Patentamt

European Patent Office

Office européen des brevets

(11) Publication number: **0 242 429**
**A2**

## EUROPEAN PATENT APPLICATION

(21) Application number: **86112657.1**

(22) Date of filing: **12.09.86**

(51) Int. Cl.⁴: **B01D 35/22 , B01D 37/00**

(30) Priority: **15.04.86 IT 2008086**

(43) Date of publication of application:
**28.10.87 Bulletin 87/44**

(84) Designated Contracting States:
**BE DE FR GB IT NL SE**

(71) Applicant: **AUSIMONT S.p.A.**
**31, Foro Buonaparte**
**I-20121 Milano(IT)**

(72) Inventor: **Calloni, Enzo**
**24, via Molise**
**I-20059 Monza(IT)**

(74) Representative: **Barz, Peter, Dr. et al**
**Patentanwälte Dipl.-Ing. G. Dannenberg Dr.**
**P. Weinhold, Dr. D. Gudel Dipl.-Ing. S.**
**Schubert, Dr. P. Barz Siegfriedstrasse 8**
**D-8000 München 40(DE)**

(54) **Filtration device for oils.**

(57) A device for filtering the lubricant oil used in vacuum pumps, to be directly installed on the pump, for continuous or discontinuous operation, and characterized in that the filter is of the tangential-flow type.

EP 0 242 429 A2

## FILTRATION DEVICE FOR OILS

The present inventions relates to a vacuum pump equipped with a filtration device for the lubricating oil.

It is known that the lubricant oil used in vacuum pumps is subject to pollution due to substances contained in the gas phase intake and, possibly, also to the mechanical wear of the pump or a possible corrosion thereof.

In particular, the solid impurities dispersed in the oil can cause mechanical wear or malfunctioning of the running parts because of the formation of deposits and contamination. To obviate such drawbacks, the vacuum pumps are generally provided with oil filters. In practical use, however, filters of the conventional type do not give good results because the solid impurities have the form of a gel or of gums or mucilages which form a practically impermeable film on the filter and drastically reduce the filter efficiency or even make operation thereof practically impossible.

It is known from GB-A-1 561 696 that it is very difficult or almost impossible to eliminate fine particles of foreign materials dispersed in non-conductive liquids, such as, for example, oils, by using a film. The British patent discloses an apparatus for the electrostatic purification of oils by using various collecting members for the impurities, inserted between anode and cathode plates, parallel to the electric field created in the apparatus. The value of the applied voltage is determined by the size of the particles and increases as the particles become smaller. This method is, however, not practical when a large amount of oil has to be purified and, furthermore, it is also very expensive.

It has now been found that a particular type of tangential-flow filter is perfectly capable of filtering any type of suspended solid matter, in a continuous manner, the filter having very long running times and no need for servicing such as the replacement of filtering elements.

The filter used in accordance with the present invention is of the tangential-flow type. The liquid to be filtered is made to flow at high tangential speed on the filtering surface, thus preventing a deposit of solid matter on the surface. The filtering surface must have pores of very small diameter so as to accomplish a complete separation of even the smallest solid particles. Diameters of less than 0.4 $\mu$m and, preferably, of the order of 0.2 $\mu$m, are required.

A type of filter suitable to perform the filtration as described above is the filter manufactured by Membrana Inc. (U.S.A.) and marketed under the tradenames DYNA-SEP® and PHARMA-SEP®. The filtering surface of these filters is constituted by a cylinder or a tubular element of porous polypropylene, inside of which the liquid to be filtered, kept at a pressure higher than that outside the tubular surface, is made to flow at high speed. The filtrate escaping to the outside through the tubular filtering surface is collected whilst the liquid to be filtered is continuously recycled.

When the concentration of solid matter dispersed in the liquid being recycled has reached a very high value, it is recommended that it be disposed of so as not to decrease the filter efficiency to a great extent.

The pressure to which the liquid to be filtered can be submitted, of course, depends on the characteristics of the device, which can operate up to a maximum pressure of 4 bar.

The temperature of the liquid is also an important parameter. It is not possible to exceed a threshold temperature, which is determined by the resistance of the material constituting the filtering element, said temperature being, for the above-mentioned filters, in the order of 60°C.

Should the temperature of the oil inside the vacuum pump exceed 60°C, the oil will have to be cooled before it is passed on to the filter.

The filtering device according to the present invention can be applied to any types of oils for vacuum pumps such as silicone oils, as well as conventional hydrocarbon oils (mineral oils).

Particular advantages are achieved with pumps using perfluoropolyether oils such as Fomblin® - (Montedison), Krytox® and similar commercial products as well as the perfluoropolyethers described in EP-A-148482.

The filtration device according to the invention may be used with any type of vacuum pumps known from the prior art, using an operating fluid of the type of lubricating oils, by means of suitable connections and ancillary devices (valves, circulation pump, possible means for heating or cooling the oil to be filtered), which enable it also to be used in continuous and automatic operations.

In particular, the circulation pump must ensure an adequate tangential speed of oil inside the filter.

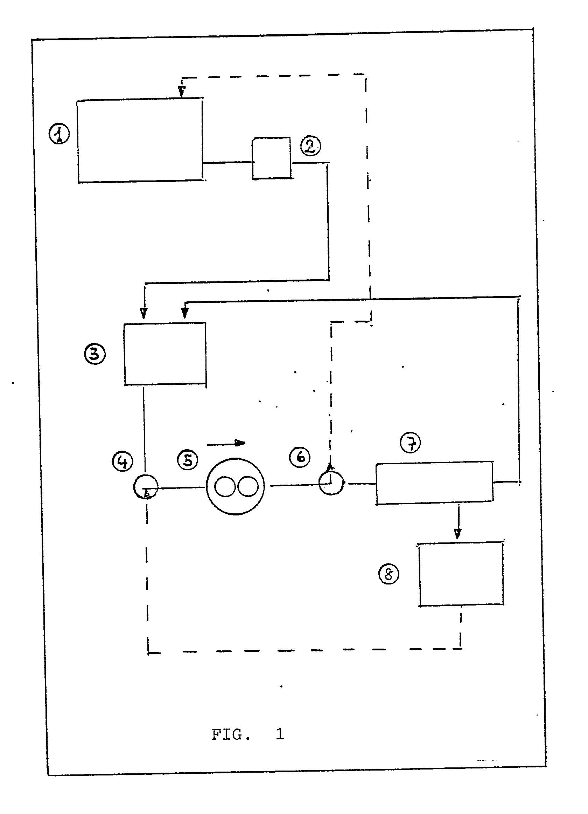

An example of an installation diagram is represented in Fig. 1, wherein the reference numbers have the following meaning:

1) Vacuum pump

2) Oil drain valve, which can be of the automatic, intermittent or continuous operation type;

3) Reservoir for collecting the oil to be filtered; This functions also as a storage unit for the oil recycled from/to the filter;

4) Three-way valve for connecting the inlet (intake) of pump (5) alternatively either with the reservoir of oil to be filtered (3) or with the tank of filtered oil (8);

5) Gear pump;

6) Three-way valve for connecting the output of pump (5) either with the filter (7) or with the vacuum pump (1);

7) Filter unit

8) Collecting tank for filtered oil.

The connection diagram as shown in Fig. 1 is suitable for a semi-continuous operation. The filter operation should be periodically discontinued for a short time to allow the gear pump to recycle the filtered oil to the vacuum pump. Obviously, a device operating on a completely continuous cycle is also possible.

## COMPARATIVE EXAMPLE

In a pump Alcatel® 2012C the perfluoropolyether (PFPE) Fomblin® micron L-Vac 25/6 micron = 2700 (at T = 20°C), contaminated with $SiO_2$ in the form of solid particles was used as the lubricating fluid.

The vacuum, measured after 1 hour, was $10^{-3}$ Torr. After 60 days of pump operation, the vacuum measured was $10^{-2}$ Torr.

## EXAMPLE 1

The same pump as in the preceding example was used with the same contaminated oil but this time, the pump was equipped with a tangential filter manufactured by Membrana Inc., U.S.A., and marketed under the tradenames DYNA-SEP® and PHARMA-SEP®, with the filtering surface having a diameter of the order of 0.2 μm. This filter was inserted as shown in Fig. 1.

After 60 days of pump operation, the vacuum measured was $10^{-3}$ Torr.

## Claims

1. A filtration device for oils used as operating fluids in vacuum pumps, which device is suitable to be directly connected to a vacuum pump for either continuous or discontinuous operation, comprising as its essential components:
-a filter of the tangential-flow type, wherein the filtering element has pores having a diameter of less than 0.4 μm;
-a circulation pump for continuously recycling the oil to be filtered in order to maintain an adequate tangential speed of oil on the filter.

2. The device of claim 1, wherein the tangential-flow filter is provided with a filtering element having a pore diameter of the order of 0.2 μm.

3. The device of claim 1, wherein the filtering element is constituted of porous polypropylene.

FIG. 1